# EUROPEAN PATENT SPECIFICATION

(11) **EP 1 803 599 B1**
(45) Date of publication and mention of the grant of the patent: **05.11.2008**
(21) Application number: 05381063.6
(22) Date of filing: 28.12.2005
(51) Int. Cl.: B60J 7/00

(54) **Shading device for vehicle roofs with a transparent element and method of locking said device**
Dachhimmel für Fahrzeug-Dächer mit einem transparenten Element und Verfahren zur Blockierung des Dachhimmels
Rideau pour toit de véhicules avec une partie transparente ainsi que la méthode pour verrouiller ce dispositif

(43) Date of publication of application: 04.07.2007
(73) Proprietor: GRUPO ANTOLIN-INGENIERIA, S.A., 09007 Burgos (ES)
(72) Inventor: Marcos Gonzales, César, 09002 Burgos (ES); Gonzales Merino, Ricardo, 09002 Burgos (ES); Iglesias Sedano, Ricardo, 09002 Burgos (ES)
(74) Representative: Esteban Perez-Serrano, Maria Isabel

(56) References cited:
- DE-A1- 10 338 722
- DE-C1- 19 534 288
- DE-C1- 19 538 552
- US-A1- 2002 050 327

## Description

### OBJECT OF THE INVENTION

The present invention consists of a shading device for vehicle roofs with a transparent element as well as the method of locking said device, which makes use of technical solutions specially designed for application on devices that have to cover considerable areas where the inertial effects during vehicle acceleration and braking are greater than in those normally used.

The greater locking effectiveness of the device also has to be assured In geometric configurations of the transparent element giving rise to diverging side rails for the movement of the shading element.

The Invention is characterised by the use of a configuration of the locking elements based on two modules, a first module responsible for the guiding and sliding function and the second module for the locking function, where one module and the other are separated, adjacent and integral with each other.

The locking increases Its retaining capacity noticeably when It includes toothing coinciding with other toothing on the Inside of the rail.

The object of the invention is a locking method, consisting of the use of different locking devices with the two separate modules, which is in turn actuated from a single point that is not necessarily located on the same sheet, so that each locking module is positioned properly in relation to Its rail.

### BACKGROUND OF THE INVENTION

It is normal for vehicles to be provided with transparent elements, due not only to the presence of windows but also the fitting of roofs with transparent areas.

These transparent areas provide the vehicle occupant with greater visual access to the exterior, but they also permit the more ready entry of the sun's rays, so that shading elements have to be fitted to establish a protection barrier to prevent excessive radiation.

Since the trend in this technical field Is to go on increasing the transparent area, the shading elements have to be made correspondingly larger.

This Increase in size Is not a mere scaling of shading device, but there is a set of added problems that are not present when the area to be covered is small.

One of the added problems is that of the configuration of shading element along with the form that is adopted by the directrix of the sliding rails of said shading element.

As the shading element covers larger areas, the changes in curvature are either more pronounced or give rise to larger changes of angle, besides it being necessary to adopt technical solutions that will permit the form of the shading element to adapt to the surface to be covered.

The changes of angle referred to are for instance those measured between the side sliding rails of the shading element. The directrix associated with each rail will be curved in the most complicated case essentially according to two curvatures: one curvature that we will call vertical and which gives rise for Instance to a lowering of the front ends of the rail on approaching the windscreen; and a second curvature, which we will call transversal, associated with the divergence of the rails in this same front area due to the separation Imposed by the actual windscreen.

When the radius of vertical curvature is large on roofs covered by panoramic transparent elements, the vertical curvature gives rise to considerable variations in height, so that if the shading element Is not able to hug to the transparent element, the loss of accommodation may be excessive.

The larger dimensions of the shading element give rise to similarly larger inertial stresses and this is one of the main reasons why the earlier technical solution are not valid as a mere braking action means that the shading element is not retained and therefore moves more or less abruptly towards the front of the vehicle, a situation which is not considered acceptable. The same situation may be repeated In the event of sharp accelerations, which merely act In the opposite direction on masses, which, as we have mentioned, present increased inertia.

Furthermore, the changes in orientation in the rails owing to the vertical and transverse curvature, as well as the separation resulting from the divergence of the rails mean that the bearing surface of the retaining means normally used Is not adequate. This support of the retaining elements In positions that give rise to an incidence deviated from the optimum, along with the Increase in the inertial stress present during acceleration and braking, causes the effectiveness of known locking devices to be insufficient.

Amongst known locking mechanisms we may mention the one described in the patent with publication number JP8121057 In which the sliding rail is provided with toothing with which a cog wheel meshes. This meshing causes the cog wheel to turn in correspondence with the movement of the shading element. The housing of this cog wheel includes a friction element that acts on the same piece in an attempt to Immobilize it. The braking effort on this piece is transmitted entirely to the toothed rack, so that the friction that retains the shading element is not produced between the toothed rack and the wheel which meshes but between the body that contains the cog wheel and the friction element associated with the housing containing the assembly. This is none other than a means of shifting the place where the friction retention takes place.

The patent with publication number DE10248958 also describes a method of friction retention. In this patent use is made of an essentially elastomeric piece with high deformation capability able to pivot around an axis in such a way that a set of projecting ridges are engaged In running recesses. The turning effort Is produced by a spring, which gives rise to the deformation of an arm that rests on the Inside of the rail.

A different retention diagram Is shown in the patent with publication number EP1403109 , where two opposing arms rest on a single internal face of the rail. These arms start out from a rigid body, which moves In the rail and has swivelling capability. This swivelling enables pressure to be exerted against the end of one of the arms, which are deformed and oppose this swivelling. The pressure against the inner surface of the rail by the end of the arm Is what increases the friction retention. This type of retention is only possible In small-sized shading elements as the friction area Is limited.

The effectiveness of a locking device does not depend only on the method of exerting pressure against the rail, but other elements are also involved, such as the actuators that enable pressure to be exerted, besides the support structure which determines the orientation and positioning with which the friction element impinges against the rail.

The patents with publication numbers EP1353037 and EP1201473 may also be cited. In both patents use is made of a transverse slat connecting one side rail to the other. This slat therefore forms the structure both of the friction elements and of the actuator.

At the ends where the locking action is applied there is a friction element which is integral with the sliding element, provided with a means of retraction either by cable or else by a centrally actuated rod, depending on the patent. The differences between one patent and the other lie essentially in the central section, where it is the actuator that locks or releases the locking. The whole device forms a single body.

It is of interest to consider the patent with publication number DE10338722 on account of Its mode of establishing a technical solution to locking on diverging rails. In this patent use Is made of guiding pieces that swivel around a spindle so that the divergence of the rail imposes the rotation of this guiding and support piece.

The locking action is carried out by means of a friction element integral with the structure of the slat on which the spindle where the sliding guide swivels Is installed and they are not directly dependent on this guide, so that the locking action Is brought about by exerting pressure at an intermediate point where the swivelling guide piece is located.

In this arrangement there is no direct mechanical dependence between the guide and the locking device, giving rise to a layout which has been discarded because It does not permit a sufficient stress level to retain such a device as has been reached with the present Invention.

Lastly, we wish to mention the patent with publication number DE4200422 , where a shading device Is described that is retained by a transverse toothed pressure element which rests against other toothing disposed along the rail. In this pressure element, through the spring used and the layout of the teeth it is possible to determine what the critical effort Is as of which a force in forward or backward direction enables the retention to be overcome.

It is known from the state of the art a sunblind unit as the one disclosed in DE 195 34 288 C1 which is provided underneath the lid of the sunroof and has at the front a fixing element connected to a sunblind panel, wherein the fixing element contains a ventilation unit such as a slit, additional the fixing element is guided in side guide rails by resilient slide jaws, furthermore the fixing element can be coupled by bolt rods running across the blind panel to the elements fixed on the roof or sunroof, It also comprises a locking component on each side of the sunroof which can be coupled to the bolt rods of the fixing element

The aim Is to keep the shading element retained in a given position and move said shading element by exerting a force that overcomes the retention. The pressure element is not necessarily withdrawn, so that if a high level of retention is required, it may not be possible to apply a reasonable force in order to be able change their position. It continues to be a retention element for small masses and therefore presenting low inertia.

### DESCRIPTION OF THE INVENTION

The present invention consists of a shading device for vehicle roofs with a transparent element provided with suitably designed locking means so that they may provide effective locking with their dimensions, while still giving rise to considerable inertial masses.

For informative purposes, as they have been used, a distinction is made between a shading device, which is none other than the core of the invention, and a shading element, where the latter is the element that actually covers the transparent area and that requires guides and rails, and locking and other elements to form the shading device, In this way, the shading element is a part of the shading device.

This shading device is essentially made up at least of a shading element running between rails in to move along the whole length of the vehicle roof.

The need to Increase the retention capacity has led to a design of sturdier and larger-sized locking means, We shall see that mere scaling and reinforcement of the frame is not sufficient, but that a new arrangement of the elements has to be established with a suitable layout The integration of the braking shoes in the guides as seen in the prior art documents gives rise to space restrictions and determining factors that interfere with the presence of sufficiently effective and suitably sized locking means.

In the present invention distinction is made between a guiding and a locking module. The former has sliders and assures the following of the path imposed by the rail. The latter, the locking module, is separate in order to have the maximum space due to the absence of elements associated with the guiding function, so that it may be possible to utilise larger sized braking shoes.

Although separate, the locking module Is disposed adjoining and integral with the former as, in any case, it is essential that the braking shoe should have a suitable support against the surface on which It treads; and this suitable tread is achieved when the position of the braking shoe is perpendicular to the contact surface, giving rise to maximum retention.

This adjacent position assures the same orientation as the guiding module for the curvatures used on the rails, so that the separation between the modules and the maximum space possible for appropriate braking shoe sizing are maintained, while the modules have to be made integral with each other so that the tracking of the locking module is assured despite the appearance of considerable stress.

The locking module shoe, braking shoe, is in a braking shoe-holder which guides the transverse projection of said shoe. An option of interest for achieving a high degree of retention is to utilise toothing on the braking shoe. This toothing permits retention and is not designed in principle so that the stress due to acceleration enables the retention to be overcome; to the contrary, the intention is to increase the interlocking between the braking shoe and the rail.

In this case, the rail is provided with toothing or splining on its inner surface, which may be configured on the actual body of the rail, by press stamping for instance, or else it may be incorporated by making use of such additional pieces as a strap or rack attached to the rail.

Since the separation of the guiding module from the locking module permits larger braking shoe dimensions, in some cases in the braking shoe pressure area it is possible to include an elastomer which supplies a sufficient degree of friction against the rail.

The pressure exerted by the braking shoe against the inner rail splining or toothing is due to a spring. If the spring is the compression type, this may be guided to prevent buckling for instance by means of a threaded stud, which serves to position the braking shoe so that the degree of braking shoe projection may be adjustable; and if the spring rests against a threaded bushing, the degree of spring pressure is also adjustable.

The braking shoe is preferably released by means of a retraction cable. This cable is actuated from a single point, for example by a "press and pull" type actuating latch, which may operate other locking means at the same time.

The locking means may even be different cross members, which would give rise to the retention procedure of this invention according to a more effective retention diagram in the case of larger-sized shading elements and in which, furthermore, the shading element does not have to be rigid. The absence of rigidity requires that each cross member should have locking means, which will be like those described.

The braking shoeholder is the main body of the locking module and this may be securely attached to the guiding module simply because it is formed as a single piece without this not meaning that they are considered separate, so that each of them performs its function, and spatially because they are not integrated, but they are certainly always adjacent.

The rails may be diverging. In this case the divergence of the rails means that both modules have to follow the path imposed by the rail directrix properly.

Adaptation to the greater or lesser separation between the rails is achieved by means of telescopic sections of one or two arms. In these cases, it is possible to make use of triangles integral with these telescopic arms so that they may cover the additional space generated by the separation.

One way of carrying out the retention of this type of device consists of fitting the retention means on the back part of the cross member, especially when the divergence occurs as of this point because in this way the blocking means are never actually situated at the points of the rail which have a transverse curvature, assuring that the tread is always perpendicular. The rigidity of the locking means will always be greater when there is no need for these means to turn and they are positioned in accordance with the curvature of the rail. The method of positioning and distributing the locking means along the shading device is considered to be part of the locking method.

Nonetheless, likewise an object of this invention is the consideration of shading devices in which the locking means make use of guiding modules and locking modules which, although integral with each other, have the ability to turn in order to come into line with the orientation of the rail. In this case, the two modules form a single body capable of swivelling at one point so as to adopt the appropriate orientation.

The use of non-rigid shading elements allows the guiding modules to position the locking means appropriately according to the vertical curvature independently of the inclination of the locking means situated on different cross members.

This point around which they swivel may also be situated on a telescopic section which adapts to the degree of separation imposed by rail divergence.

### DESCRIPTION OF THE DRAWINGS

The present descriptive report is supplemented with a set of drawings illustrating the preferred embodiment, but never limiting the invention.

Figure 1a represents an upper plan view of the shading device showing a simple diagram of the distribution of the points where the locking is carried out.

Figure 1b represents a close view of the actuating system for releasing the shading device lock as seen from below, i.e. from where the user in the interior of the vehicle has accesss.

Figure 2 represents a perspective view of a locking means according to a specimen embodiment.

Figure 3 is a double sectional view of the locking means in the non-locking and locking position, respectively. Each of these close views in turn has a second close view showing the meshing of the braking shoe toothing.

Figure 4 is a second example corresponding to another distributed locking method making use of individual locking means.

Figures 5a and 5b show close views of an embodiment of the invention which makes use of telescopic elements that enable the shading element to adapt to the greater separation distance imposed by the divergence of the rails at the front end.

### SPECIMEN EMBODIMENT OF THE INVENTION

In this section we are going to describe a set of examples both of the individual locking means and of the locking method based on the use of these individual locking means spread out along the shading element.

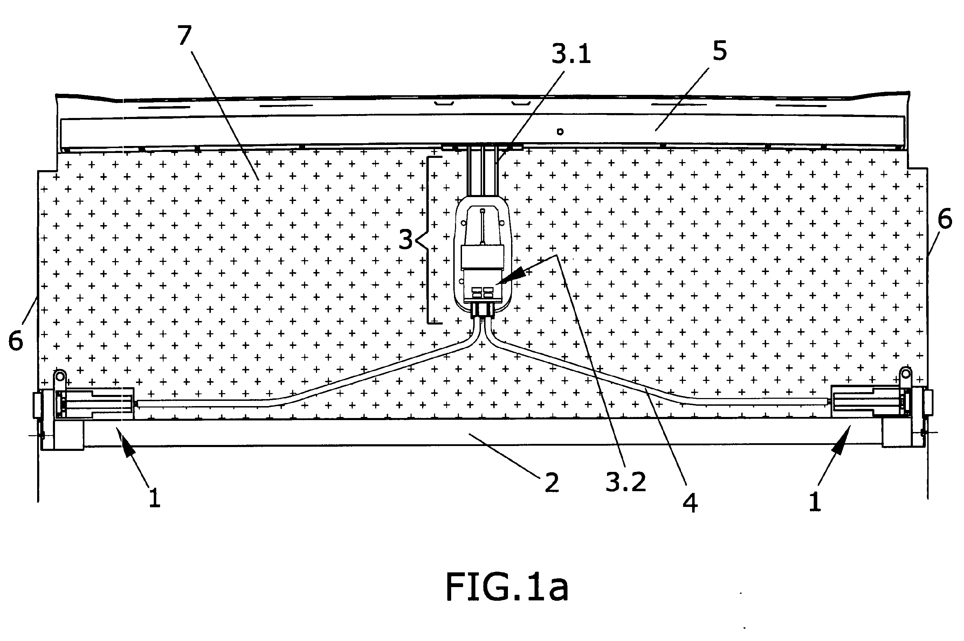

Figure 1a shows a first specimen shading device consisting of a shading element (7) made rigid by means of a front cross rail (5) and a rear cross rail (2).

The braking method of this shading device is based on the use of an actuating latch (3) which in this example is considered manual, of the "press and pull" type. This latch (3) may be linked to the shading element (7), to the front cross rail (5), or to both (5, 7). This representation shows how the latch (3) is linked to the shading element (7), although it nevertheless has connecting ribs (3.1) to the front cross rail. This connection may be effected by screwing or else by a support.

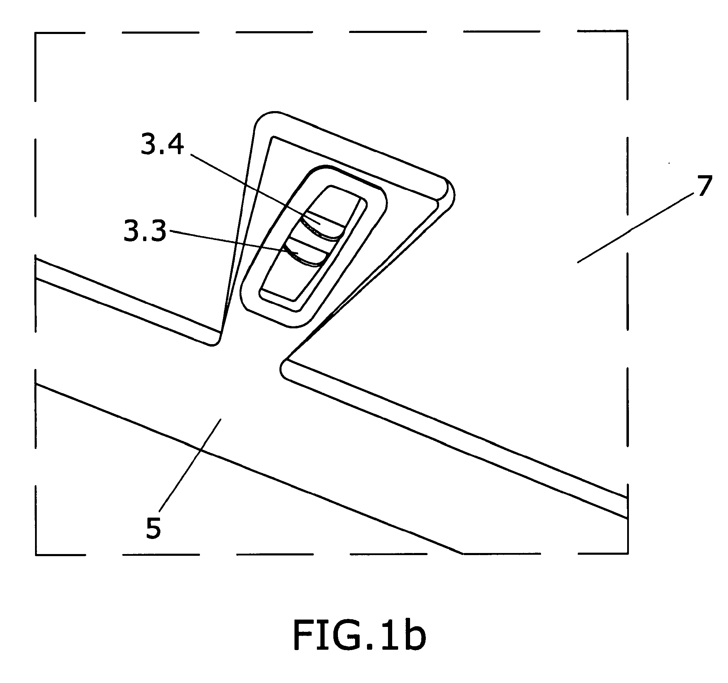

The latch system (3) used by way of example includes tabs (3.3, 3.4), one (3.3) integral with the latch frame, configured as a simple projection, the other one (3.4) moving in such a way that, being clipped to each other, the moving tab (3.4) pulls cables (4), which are sheathed in this example, by means of a coupling(3.2). The close view of this method of manual actuating is shown in figure 1b.

The use of sheathed cables (4) enables traction to be applied at a distant point without the orientation of the traction force having to coincide with that applied at the actuating latch (3), besides preventing the generation of noise and permitting easy adaptation to the vertical curvature. This is our case. The traction force is longitudinal at the latch (3) and it has to be transverse at the locking means (1).

The shading device slides along rails (6), which are only shown in this figure 1a with a line, leaving their proper representation for subsequent figures.

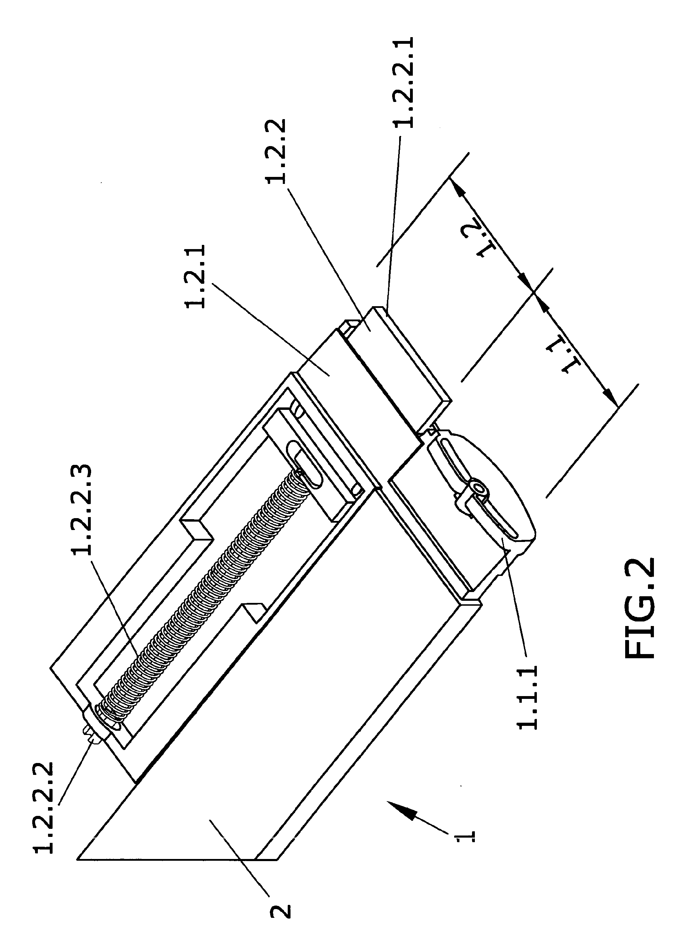

The locking means (1) is that described in the invention, where a mode of embodiment is shown in figure 2 and consists essentially of a combination of two modules, a first guiding and sliding module (1.1) and a second locking module (1.2), both being separate, adjacent and integral with each other.

The functions of the guiding module (1.1) are confirmed to be separate from the functions of the locking module (1.2), and said separation also exists spatially.

In this specimen embodiment we may verify the continuity of the housing forming the braking shoe-holder (1.2.1) which accommodates and guides the braking shoe (1.2.2) with the main body of the guiding module (1.1), which in this example incorporates the slider (1.1.1) with a spring - a continuity which does not mean that separation does not exist in the terms stated. The slider (1.1.1) determines the correct guiding of the assemblage of the two modules, the guiding (1.1) and the locking (1.2), integral with the former (1.1).

Furthermore, as has already been introduced, the locking module (1.2) consists of a braking shoe-holder (1.2.1) belonging to the main prismatic body, which guides the braking shoe (1.2.2) in such a way that its movement is perpendicular to the rail (6) on which it impinges.

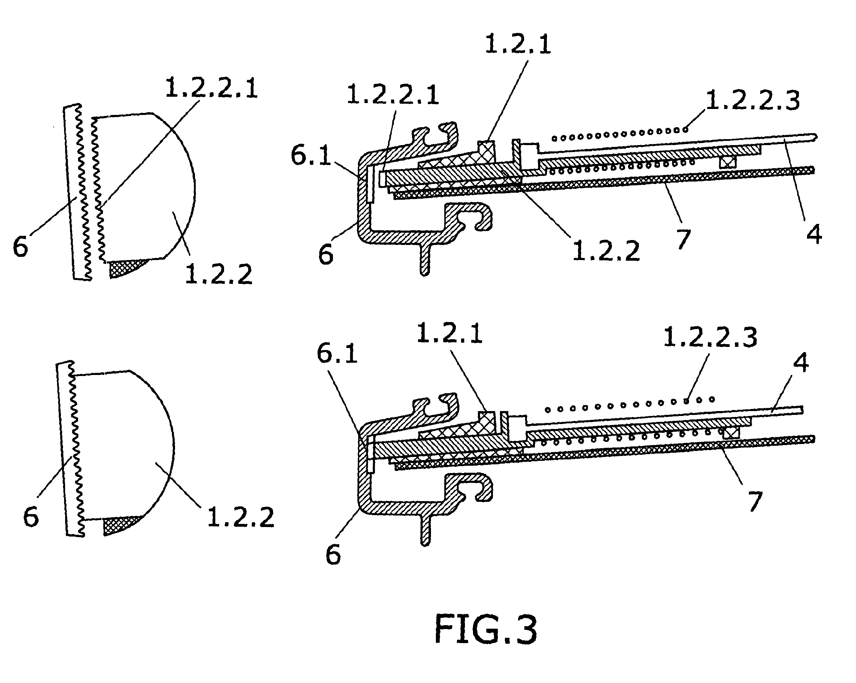

The end of the braking shoe (1.2.2) is provided with splining or toothing (1.2.2.1), a close view of which is shown in figure 3. When use is made of elastomers in another possible embodiment of the invention, this prevents the noise so typical of tooth friction. This toothing is intended to be aligned with the internal splining or toothing (6.1) on the rail (6), which may be produced by press stamping, knurling or by the inclusion of an additional element such as a rack or strap. In this way, the toothing or splining of one and the other may or may not match up with each other. When they are matching in form, a meshing is established that increases retention very considerably. It is even possible to make use of teeth whose pressure faces in the meshing do not necessarily have a transverse projection, so that they do not give rise to a separating force between the braking shoe (1.2.2) and the rail (6) when the shading element requires a retaining effort in a longitudinal direction.

Both in figure 2 and in the cross sections in figure 3 - the latter in greater detail - we may observe the locking method due to the impingement of the braking shoe (1.2.2) toothing (1.2.2.1) against the toothing (6.1) of the rail (6).

The braking shoe (1.2.2) impinges against the toothing (6.1)of the rail (6) thanks to the pressure exerted by a spring - in this example a compression spring (1.2.2.3) accommodated in the housing of the locking module (1.2), which is in turn houses a stem (1.2.2.2) interiorly. This stem (1.2.2.2) prevents the buckling of the spring (1.2.2.3) and, in turn, acts as a guide for the retraction of the braking shoe (1.2.2). The stem (1.2.2.2) may be provided with an adjusting screw which allows us to define how much of the braking shoe (1.2.2) projects for a suitable adjustment in respect of its housing and in respect of the rail (6).

It is also through this stem (1.2.2.2) how the retraction is effected thanks to the pull exerted by the cable (4), which is connected to the latch (3).

In this example use is made of toothing both on the rail (6) and on the braking shoe (1.2.2), and it is important that the braking shoe (1.2.2) should impinge as perpendicularly as possible to the rail (6) at all times.

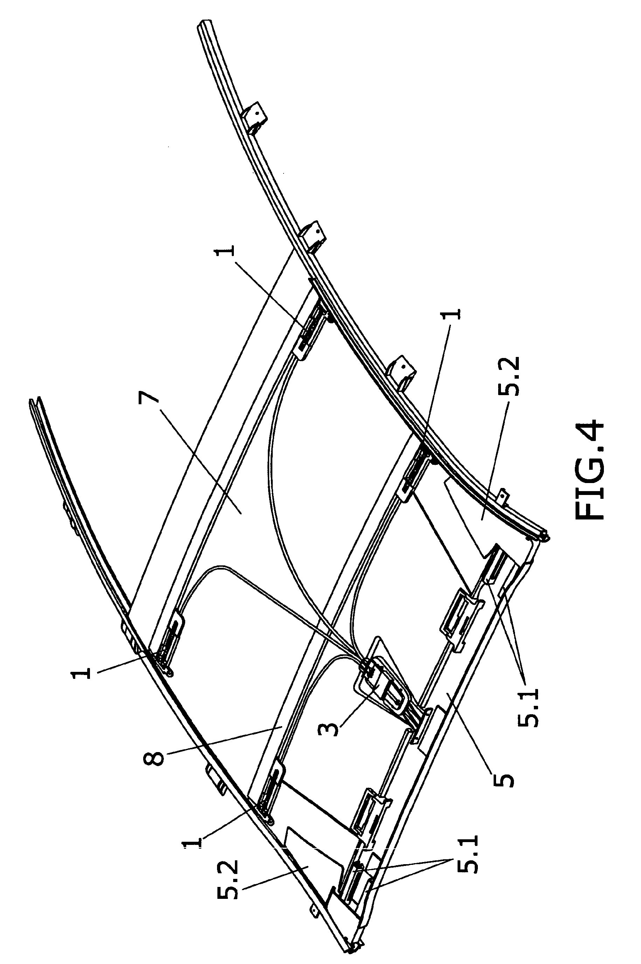

Assuring this locking condition can be achieved in different ways, some of them shown in figure 4. This figure 4 shows another method of locking the shading device consisting of making use of a single actuating latch (3) from which there run four cables (4), one per locking means (1). Four locking means (1) - two on an intermediate cross member (8) and the other two on a rear cross member (9)- are distributed.

The fact of duplicating the locking modules means that the braking pressure is also doubled; the actuating effort is, however, multiplied by a factor higher than two as, besides overcoming the force of the springs, it is necessary to overcome the friction of the cables in their sheath, along with the increase brought about by their curvature, a factor that increases in importance with the distance of the cables. In this situation it is possible that the requirements imposed by the actuating effort ceiling may not be met and that it might be necessary to include means of actuating assistance, such as a motor for pulling the cable or employing mechanical means that make use of down-gearing to increase the actuating force.

In the same figure 4 we may observe the presence of diverging rails (6) which are parallel up to where the intermediate cross member (8) appears, and from there on in a forward direction they go on separating. Since the shading element appears in the figure slid right forward, the cross member (8) is also in the most forward part, so that it is still in the section where the rails (6) are parallel, for which reason it is even more evident that the rear cross member (9) always runs along parallel sections of the rails (6).

With this configuration we ensure that by means of a fixed firm structure of the locking means (1) in relation to the cross members (8, 9) the tread of the braking shoes (1.2.2) is always effected as perpendicular as possible to the inner surface of the rail (6), where the toothing (6.1) or splining is.

In this same figure use is made of a front cross member (5) with two transverse telescopic extensions (5.1) on either side provided internally with a guiding means that adapts to the divergence of the rails(6). It is possible to make use of single telescopic extensions on either side.

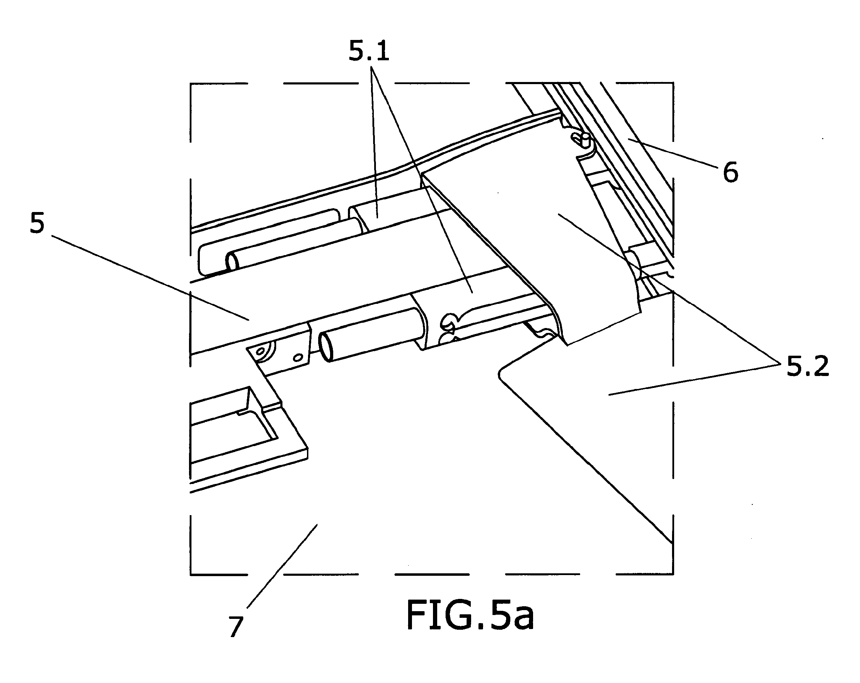

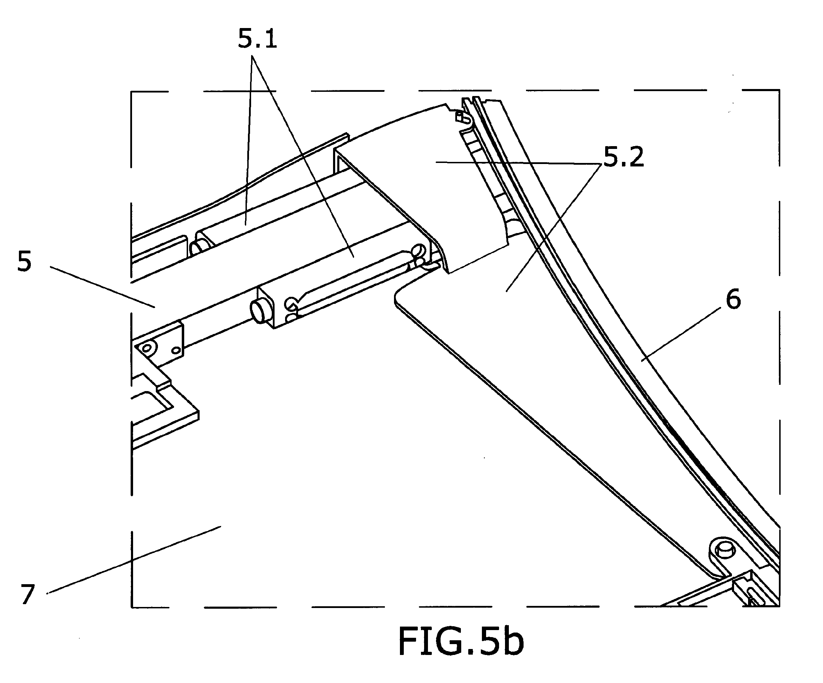

Figures 5a and 5b show in greater detail a side with the front cross member (5) with the extensions (5.1) in positions corresponding to positions of the shading device where the rails have not separated and where they have separated thanks to the front divergence.

The additional space that is generated with the divergence of the rails(6) is covered with a triangular piece(5.2) which swivels near its rear vertex and which is integral with the guiding means so as to open with them.

The invention is also taken to include the solution of providing the locking means (1), consisting of the integral union of the guiding module (1.1)with the locking module (1.2), with rotation, with the result that these locking means adapt to the opening imposed by the divergence of the rails (6). This rotation will be around an axis essentially perpendicular to the main plane of the shading element (7) at that point.

The locking method that is described may be summarised as a method based on a single actuating point (3), from which run as many cables (4) as locking means (1) that are going to be used.

These locking means (1) have to follow the path and orientation corresponding to the point at which they impinge on the rail (6) and this orientation does not match that of the actuating latch (3), which is situated at the front part.

For this reason preferred use is made of sheathed cables (4) that make the orientation and position of each of the locking elements (1) independent of that adopted by the actuating latch (3).

These points distributed where the locking takes place may be two or more, taking into account that they must be pairs for the locking to be balanced. These locking means (1) are located at the ends of the cross members and may even cover the rear members and any intermediate one.

Naturally, the locking means (1) to be considered as the ones used in this method are those described in the invention because they are the ones that endow the shading device with the necessary retaining capacity.

Mention has also been made of the possibility of utilising locking means (1) with rotational capability in order to adapt to the divergence, which increases the range of positions where these locking means (1) may be located, or also placing all the locking means (1) at points of the shading device, such that in all their possible positions the points where they are situated correspond to places where there is no rail (6) divergence. The latter strategy gives rise to mechanically simpler and sturdier modes of embodiment without it being possible to discount the former for instance in designs where the diverging sections of the rails (6) are of considerable length.

When the retention is sufficient, it is possible to carry out a simple mode of embodiment of the invention incorporating a single locking module (1) on one side. Good lateral guiding permits this layout, which has the advantage of presenting a minimal actuating effort requirement.

## Claims

1. Shading device for vehicle roofs with a transparent element, which comprises at least one shading element (7) that runs between rails (6) in order to move all along the roof of said vehicle **characterised in that** it is provided with locking means (1) consisting of a combination of two modules, an Initial guiding and sliding module (1.1) and a second locking module (1.2), both being separate, adjacent and Integral with each other, where:
the guiding and sliding module (1.1) has sliders (1.1.1) that determine the correct guiding of the assembly of the two modules; and,
the locking module (1.2) consists of a braking shoe-holder (1.2.1) that guides the transverse projection of a braking shoe (1.2.2) against a rail (6), pressed all the time by a spring and releasable by means of a retraction cable (4).

2. Shading device for vehicle roofs with a transparent element according to claim 1 **characterised in that** the guiding module (1.1) and the locking module (1.2) are integral) because they are integrated into a single body.

3. Shading device for vehicle roofs with a transparent element according to claim 1 **characterised in that** the braking shoe (1.2.2) is toothed (1.2.2.1) and is intended to press against interval toothing (6.1) or splining on the rall(6).

4. Shading device for vehicle roofs with a transparent element according to claim 3 **characterised in that** the splining or toothing (6.1) on the rail (6) has a configuration which matches up with the splining or toothing of the toothed (1.2.2.1) braking shoe (1.2.2).

5. Shading device for vehicle roofs with a transparent element according to claim 1 **characterised in that** the braking shoe (1.2.2) is provided with an elastomer at one end to increase the friction with the rail (6) against which It presses.

6. Shading device for vehicle roofs with a transparent element according to claim 1 **characterised in that** the toothing (6,1) or splining of the rail (6) is configured on its Inner face forming part of the rail (6).

7. Shading device for vehicle roofs with a transparent element according to claim 1 **characterised in that** the toothing (6,1) or splining of the rail (6) is achieved by the inclusion of an additional piece which is the one that Incorporates said toothing (6.1) or splining.

8. Shading device for vehicle roofs with a transparent element according to claim 7 **characterised in that** the splines are formed by a strap.

9. Shading device for vehicle roofs with a transparent element according to claim 7 **characterised in that** the splines or toothing (6.1) are formed by a rack attached to the rail (6).

10. Shading device for vehicle roofs with a transparent element according to claim 1 **characterised in that** the locking module (1,1) is made up of a single prismatic body housing the spring, preferably a compression spring (1.2.2.3) for exerting pressure on the braking shoe (1.2.2).

11. Shading device for vehicle roofs with a transparent element according to claim 10 **characterised in that** the spring has a pressure adjusting screw.

12. Shading device for vehicle roofs with a transparent element according to claim 10 **characterised in that** the braking shoe (1.2.2) has a position adjusting screw for adjusting the degree of projection In relation to its housing.

13. Shading device for vehicle roofs with a transparent element according to claim 1 **characterised in that** both the guiding means (1.1) and locking means (1,2) are located on the front cross member (5) or on an intermediate one (8).

14. Shading device for vehicle roofs with a transparent element according to claim 1 **characterised in that** the both the guiding means (1.1) and the locking means (1.2) are located on a rear cross member (9).

15. Shading device for vehicle roofs with a transparent element according to claim 1 **characterised in that** the rails (6) are divergent.

16. Shading device for vehicle roofs with a transparent element according to claim 15 **characterised in that** the front cross member (5) of the shading element includes two telescopic sections (5.1) on either side In order to adapt to the separation Imposed by the divergence of the rails (6).

17. Shading device for vehicle roofs with a transparent element according to claim 16 **characterised in that** the front telescopic section is linked to the triangle (5.2) for opening.

18. Shading device for vehicle roofs with a transparent element according to claim 15 **characterised in that** the front cross member (5) of the shading element includes a single telescopic section on either side in order to adapt to the separation Imposed by the divergence of the rails.

19. Shading device for vehicle roofs with a transparent element according to claim 1 **characterised in that** the actuating latch (3) Is the "press and pull" type.

20. Shading device for vehicle roofs with a transparent element according to claim 1 **characterised in that** the actuating latch (3) is located In the shading element (7).

21. Shading device for vehicle roofs with a transparent element according to claim 20 **characterised in that** the actuating latch (3) is supported or attached to the front cross member (5).

22. Locking method for the shading device for vehicle roofs with a transparent element configured according to the foregoing claims **characterised in that** It consists of making use of a single central actuating latch (3) from which run retraction cables (4), preferably In a sheath, to two different locking means (1) distributed at the ends of one or more cross members, in such a way that the positioning of the actuating latch is Independent of the positioning of each of the ends of the cross member on which the locking means (1) corresponding to the point of the rail (6) where it rests is situated.

23. Locking method for the shading device for vehicle roofs with a transparent element according to claim 22 **characterised in that** use is made of two locking means (1) on the cross member immediately to the rear of the latch (3).

24. Locking method for the shading device for vehicle roofs with a transparent element according to claim 22 **characterised in that** use is made of locking means (1) on intermediate cross members(8), on rear cross members (9), or on both (8, 9) at the same time.

25. Locking method for the shading device for vehicle roofs with a transparent element according to claim 22 **characterised in that** the locking means (1) running along divergent sections of the rails (6) are provided with rotation.

26. Locking method for the shading device for vehicle roofs with a transparent element according to claim 22 **characterised in that** the whole of the locking means (1) run along sections of the rails(6) that are not divergent.

27. Locking method for the shading device for vehicle roofs with a transparent element according to claim 22 **characterised in that** use Is made of a single locking means (1) disposed on one side.

## Patentansprüche

1. Abschattungsvorrichtung für Fahrzeugdächer mit einem transparenten Element, die mindestens ein Abschattungselement (7) enthält, welches zwischen Schienen (6) läuft, um sich entlang des gesamten Daches des besagten Fahrzeugs zu bewegen, **dadurch gekennzeichnet, dass** diese mit Verriegelungsmitteln (1) ausgestattet ist, die aus einer Kombination zweier Module bestehen, ein erstes Führungs- und Gleitmodul (1.1) und ein zweites Verriegelungsmodul (1.2), wobei beide separat, aneinander angrenzend und integral miteinander sind, wobei:
die Führungs- und Gleitmodule (1.1) über Schieber (1.1.1) verfügen, welche die korrekte Führung der Baugruppe mit den zwei Modulen bestimmen; und
das Verriegelungsmodul (1.2) aus einer Bremsschuhhalterung (1.2.1) besteht, welche den querlaufenden Vorsprung eines Bremsschuhs (1.2.2) gegen eine Schiene (6) führt, der die gesamte Zeit mittels einer Feder gepresst wird und über ein Rückzugkabel (4) entriegelbar ist.

2. Abschattungsvorrichtung für Fahrzeugdächer mit einem transparenten Element nach Anspruch 1, **dadurch gekennzeichnet, dass** das Führungsmodul (1.1) und das Verriegelungsmodul (1.2) integral sind, da diese in einem einzigen Gehäuse integriert sind.

3. Abschattungsvorrichtung für Fahrzeugdächer mit einem transparenten Element nach Anspruch 1, **dadurch gekennzeichnet, dass** der Bremsschuh (1.2.2) gezahnt (1.2.2.1) ist und dafür bestimmt ist, gegen eine Innenverzahnung (6.1) oder Rippen auf der Schiene (6) zu drücken.

4. Abschattungsvorrichtung für Fahrzeugdächer mit einem transparenten Element nach Anspruch 3, **dadurch gekennzeichnet, dass** die Rippen oder Verzahnung (6.1) auf der Schiene (6) eine Konfiguration besitzen, die mit den Rippen oder der Verzahnung (1.2.2.1) des Bremsschuhs (1.2.2) zusammenpasst.

5. Abschattungsvorrichtung für Fahrzeugdächer mit einem transparenten Element nach Anspruch 1, **dadurch gekennzeichnet, dass** der Bremsschuh (1.2.2) an einem Ende mit einem Elastomer ausgestattet ist, um die Reibung mit der Schiene (6) zu erhöhen, gegen die dieser drückt.

6. Abschattungsvorrichtung für Fahrzeugdächer mit einem transparenten Element nach Anspruch 1, **dadurch gekennzeichnet, dass** die Verzahnung (6.1) oder die Rippen der Schiene (6) auf deren inneren Seite konfiguriert sind und einen Teil der Schiene bilden.

7. Abschattungsvorrichtung für Fahrzeugdächer mit einem transparenten Element nach Anspruch 1, **dadurch gekennzeichnet, dass** die Verzahnung (6.1) oder die Rippen der Schiene (6) durch den Einschluss eines zusätzlichen Teils erreicht werden, bei dem es sich um dasjenige handelt, das die besagte Verzahnung (6.1) oder Rippen einschließt.

8. Abschattungsvorrichtung für Fahrzeugdächer mit einem transparenten Element nach Anspruch 7, **dadurch gekennzeichnet, dass** die Rippen durch einen Riemen gebildet werden.

9. Abschattungsvorrichtung für Fahrzeugdächer mit einem transparenten Element nach Anspruch 7, **dadurch gekennzeichnet, dass** die Rippen oder die Verzahnung (6.1) durch einen Träger gebildet werden, der an der Schiene (6) befestigt ist.

10. Abschattungsvorrichtung für Fahrzeugdächer mit einem transparenten Element nach Anspruch 1, **dadurch gekennzeichnet, dass** das Verriegelungsmodul (1.1) aus einem einzigen prismatischen Gehäuse gebildet ist, das die Feder beherbergt, vorzugsweise eine Druckfeder (1.2.2.3) zur Ausübung von Druck auf den Bremsschuh (1.2.2).

11. Abschattungsvorrichtung für Fahrzeugdächer mit einem transparenten Element nach Anspruch 10, **dadurch gekennzeichnet, dass** die Feder eine Druckregulierschraube besitzt.

12. Abschattungsvorrichtung für Fahrzeugdächer mit einem transparenten Element nach Anspruch 10, **dadurch gekennzeichnet, dass** der Bremsschuh (1.2.2) eine Positionsregulierschraube besitzt, um den Grad des Vorsprungs gegenüber dessen Gehäuse einzustellen.

13. Abschattungsvorrichtung für Fahrzeugdächer mit einem transparenten Element nach Anspruch 1, **dadurch gekennzeichnet, dass** sowohl die Führungsmittel (1.1) als auch die Verriegelungsmittel (1.2) sich auf dem vorderen Querträger (5) oder auf einem Zwischenquerträger (8) befinden.

14. Abschattungsvorrichtung für Fahrzeugdächer mit einem transparenten Element nach Anspruch 1, **dadurch gekennzeichnet, dass** sowohl die Führungsmittel (1.1) als auch die Verriegelungsmittel (1.2) sich auf einem hinteren Querträger (9) befinden.

15. Abschattungsvorrichtung für Fahrzeugdächer mit einem transparenten Element nach Anspruch 1, **dadurch gekennzeichnet, dass** die Schienen (6) divergent sind.

16. Abschattungsvorrichtung für Fahrzeugdächer mit einem transparenten Element nach Anspruch 15, **dadurch gekennzeichnet, dass** das vordere Querelement (5) des Abschattungselements zwei teleskopische Abschnitte (5.1) auf jeder Seite einschließt, um sich an den aufgrund der Divergenz der Schienen (6) auferlegten Abstand anzupassen.

17. Abschattungsvorrichtung für Fahrzeugdächer mit einem transparenten Element nach Anspruch 16, **dadurch gekennzeichnet, dass** der vordere teleskopische Abschnitt mit dem Dreieck (5.2) zum Zwecke der Öffnung verbunden ist.

18. Abschattungsvorrichtung für Fahrzeugdächer mit einem transparenten Element nach Anspruch 15, **dadurch gekennzeichnet, dass** das vordere Querelement (5) des Abschattungselements einen einzelnen teleskopischen Abschnitt auf jeder Seite besitzt, um sich an den aufgrund der Divergenz der Schienen auferlegten Abstand anzupassen.

19. Abschattungsvorrichtung für Fahrzeugdächer mit einem transparenten Element nach Anspruch 1, **dadurch gekennzeichnet, dass** die Betätigungssperre (3) von der Art eines "Druck-und-Zieh" Mechanismus ist.

20. Abschattungsvorrichtung für Fahrzeugdächer mit einem transparenten Element nach Anspruch 1, **dadurch gekennzeichnet, dass** die Betätigungssperre (3) in dem Abschattungselement (7) befindlich ist.

21. Abschattungsvorrichtung für Fahrzeugdächer mit einem transparenten Element nach Anspruch 20, **dadurch gekennzeichnet, dass** die Betätigungssperre (3) von dem vorderen Querträger (5) gestützt wird oder an diesem befestigt ist.

22. Verriegelungsmethode für die Abschattungsvorrichtung für Fahrzeugdächer mit einem transparenten Element nach den vorherigen Ansprüchen, **dadurch gekennzeichnet, dass** diese darin besteht, eine einzige zentrale Betätigungssperre (3) zu verwenden, von welcher Rückzugkabel (4), vorzugsweise in einem Hüllrohr, zu zwei unterschiedlichen Verriegelungsmitteln (1) verlaufen, welche an den Enden eines oder mehrerer Querträger verteilt sind, auf solche Weise, dass die Positionierung der Betätigungssperre unabhängig von der Positionierung jedes der Enden des Querträgers ist, auf dem sich das Verriegelungsmittel (1) entsprechend den Punkten der Schiene (6), auf denen dieses ruht, befindet.

23. Verriegelungsmethode für die Abschattungsvorrichtung für Fahrzeugdächer mit einem transparenten Element nach Anspruch 22, **dadurch gekennzeichnet, dass** zwei Verriegelungsmittel (1) auf dem Querträger unmittelbar zu dem Rückteil der Sperre (3) verwendet werden.

24. Verriegelungsmethode für die Abschattungsvorrichtung für Fahrzeugdächer mit einem transparenten Element nach Anspruch 22, **dadurch gekennzeichnet, dass** gleichzeitig Verriegelungsmittel (1) auf Zwischenquerträgern (8), auf hinteren Querträgern (9) oder auf beiden (8, 9) verwendet werden.

25. Verriegelungsmethode für die Abschattungsvorrichtung für Fahrzeugdächer mit einem transparenten Element nach Anspruch 22, **dadurch gekennzeichnet, dass** die entlang divergenter Abschnitte der Schienen (6) verlaufenden Verriegelungsmittel (1) mit einer Rotation ausgestattet sind.

26. Verriegelungsmethode für die Abschattungsvorrichtung für Fahrzeugdächer mit einem transparenten Element nach Anspruch 22, **dadurch gekennzeichnet, dass** die gesamten Verriegelungsmittel (1) entlang Abschnitten der Schienen (6) verlaufen, die nicht divergent sind.

27. Verriegelungsmethode für die Abschattungsvorrichtung für Fahrzeugdächer mit einem transparenten Element nach Anspruch 22, **dadurch gekennzeichnet, dass** ein einziges Verriegelungsmittel (1) verwendet wird, das auf einer Seite angeordnet ist.

## Revendications

1. Dispositif d'ombrage pour toits de véhicules avec un élément transparent, qui comprend au moins un élément d'ombrage (7) qui passe entre des rails (6) afin de se déplacer tout le long du toit dudit véhicule **caractérisé en ce qu'**il est constitué d'un moyen de blocage (1) consistant en une combinaison de deux modules, un premier module de guidage et coulissant (1.1) et un second module de blocage (1.2), les deux étant séparés, adjacents et solidaires l'un de l'autre, où :
le module de guidage et coulissant (1.1) possède des glissières (1.1.1) qui détermine le guidage correct de l'ensemble des deux modules ; et,
le module de blocage (1.2) consiste en un support de sabot de freinage (1.2.1) qui guide la projection transversale d'un sabot de freinage (1.2.2) contre un rail (6), comprimé en permanence par un ressort et pouvant être libéré au moyen d'un câble de rappel (4).

2. Dispositif d'ombrage pour toits de véhicules avec un élément transparent selon la revendication 1 **caractérisé en ce que** le module de guidage (1.1) et le module de blocage (1.2) sont solidaires parce qu'ils sont intégrés dans un unique corps.

3. Dispositif d'ombrage pour toits de véhicules avec un élément transparent selon la revendication 1 **caractérisé en ce que** le sabot de freinage (1.2.2) est denté (1.2.2.1) et destiné à être comprimé contre une denture (6.1) ou cannelure interne sur le rail (6).

4. Dispositif d'ombrage pour toits de véhicules avec un élément transparent selon la revendication 3 **caractérisé en ce que** la cannelure ou denture (6.1) sur le rail (6) a une configuration qui correspond à la cannelure ou denture du sabot de freinage (1.2.2) denté (1.2.2.1).

5. Dispositif d'ombrage pour toits de véhicules avec un élément transparent selon la revendication 1 **caractérisé en ce que** le sabot de freinage (1.2.2) est pourvu d'un élastomère à une extrémité pour augmenter la friction avec le rail (6) contre lequel il est comprimé.

6. Dispositif d'ombrage pour toits de véhicules avec un élément transparent selon la revendication 1 **caractérisé en ce que** la denture (6.1) ou cannelure du rail (6) est configurée sur sa face interne faisant partie du rail (6).

7. Dispositif d'ombrage pour toits de véhicules avec un élément transparent selon la revendication 1 **caractérisé en ce que** la denture (6.1) ou cannelure du rail (6) est réalisée par l'inclusion d'une pièce supplémentaire qui est celle qui comporte ladite denture (6.1) ou cannelure.

8. Dispositif d'ombrage pour toits de véhicules avec un élément transparent selon la revendication 7 **caractérisé en ce que** les cannelures sont formées par une bride.

9. Dispositif d'ombrage pour toits de véhicules avec un élément transparent selon la revendication 7 **caractérisé en ce que** les cannelures ou denture (6.1) sont formées par une crémaillère fixée au rail (6).

10. Dispositif d'ombrage pour toits de véhicules avec un élément transparent selon la revendication 1 **caractérisé en ce que** le module de blocage (1.1) est constitué d'un unique corps prismatique hébergeant le ressort, de préférence un ressort de compression (1.2.2.3) pour exercer une pression sur le sabot de freinage (1.2.2).

11. Dispositif d'ombrage pour toits de véhicules avec un élément transparent selon la revendication 10 **caractérisé en ce que** le ressort possède une vis de réglage de la pression.

12. Dispositif d'ombrage pour toits de véhicules avec un élément transparent selon la revendication 10 **caractérisé en ce que** le sabot de freinage (1.2.2) possède une vis de réglage de la position pour régler les degrés de projection par rapport à son logement.

13. Dispositif d'ombrage pour toits de véhicules avec un élément transparent selon la revendication 1 **caractérisé en ce que** le moyen de guidage (1.1) comme le moyen de blocage (1.2) sont situés sur l'organe transversal avant (5) ou sur un organe intermédiaire (8).

14. Dispositif d'ombrage pour toits de véhicules avec un élément transparent selon la revendication 1 **caractérisé en ce que** le moyen de guidage (1.1) comme le moyen de blocage (1.2) sont situés sur un organe transversal arrière (9).

15. Dispositif d'ombrage pour toits de véhicules avec un élément transparent selon la revendication 1 **caractérisé en ce que** les rails (6) sont divergents.

16. Dispositif d'ombrage pour toits de véhicules avec un élément transparent selon la revendication 15 **caractérisé en ce que** l'organe transversal avant (5) de l'élément d'ombrage comporte deux sections télescopiques (5.1) de chaque côté afin de s'adapter à la séparation imposée par la divergence des rails (6).

17. Dispositif d'ombrage pour toits de véhicules avec un élément transparent selon la revendication 16 **caractérisé en ce que** la section télescopique avant est reliée au triangle (5.2) pour l'ouverture.

18. Dispositif d'ombrage pour toits de véhicules avec un élément transparent selon la revendication 15 **caractérisé en ce que** l'organe transversal avant (5) de l'élément d'ombrage comporte une unique section télescopique de chaque côté afin de s'adapter à la séparation imposée par la divergence des rails.

19. Dispositif d'ombrage pour toits de véhicules avec un élément transparent selon la revendication 1 **caractérisé en ce que** le loquet d'actionnement (3) est du type « pousser et tirer ».

20. Dispositif d'ombrage pour toits de véhicules avec un élément transparent selon la revendication 1 **caractérisé en ce que** le loquet d'actionnement (3) est situé dans l'élément d'ombrage (7).

21. Dispositif d'ombrage pour toits de véhicules avec un élément transparent selon la revendication 20 **caractérisé en ce que** le loquet d'actionnement (3) repose sur l'organe transversal avant (5) ou est fixé à lui.

22. Procédé de blocage pour le dispositif d'ombrage pour toits de véhicules avec un élément transparent configuré selon les revendications ci-dessus **caractérisé en ce qu'**il consiste à utiliser un unique loquet d'actionnement central (3) à partir duquel passent les câbles de rappel (4), de préférence dans une gaine, jusqu'aux deux moyens différents de blocage (1) répartis aux extrémités d'un ou plusieurs organes transversaux, de telle manière que le positionnement du loquet d'actionnement est indépendant du positionnement de chacune des extrémités de l'organe transversal sur lequel le moyen de blocage (1) correspondant au point du rail (6) où il repose est situé.

23. Procédé de blocage pour le dispositif d'ombrage pour toits de véhicules avec un élément transparent selon la revendication 22 **caractérisé en ce qu'**on utilise deux moyens de blocage (1) sur l'organe transversal immédiatement à l'arrière du loquet (3).

24. Procédé de blocage pour le dispositif d'ombrage pour toits de véhicules avec un élément transparent selon la revendication 22 **caractérisé en ce qu'**on utilise des moyens de blocage (1) sur des organes transversaux intermédiaires (8), sur des organes transversaux arrière (9), ou sur les deux (8,9) en même temps.

25. Procédé de blocage pour le dispositif d'ombrage pour toits de véhicules avec un élément transparent selon la revendication 22 **caractérisé en ce que** les moyens de blocage (1) passant le long de sections divergentes des rails (6) sont pourvus d'un pivotement.

26. Procédé de blocage pour le dispositif d'ombrage pour toits de véhicules avec un élément transparent selon la revendication 22 **caractérisé en ce que** l'ensemble des moyens de blocage (1) passent le long de sections des rails (6) qui ne sont pas divergentes.

27. Procédé de blocage pour le dispositif d'ombrage pour toits de véhicules avec un élément transparent selon la revendication 22 **caractérisé en ce qu'**on utilise un unique moyen de blocage (1) disposé sur un côté.
